# EUROPÄISCHE PATENTSCHRIFT

(11) **EP 0 986 341 B1**
(45) Veröffentlichungstag und Bekanntmachung des Hinweises auf die Patenterteilung: **24.11.2004**
(21) Anmeldenummer: 98920437.5
(22) Anmeldetag: 25.05.1998
(51) Int. Cl.: A61C 8/00

(54) **HALTEELEMENT FÜR EIN IMPLANTAT UND AMPULLE ZUR AUFBEWAHRUNG DES IMPLANTATS**
RETAINING ELEMENT FOR AN IMPLANT AND AMPOULE FOR PRESERVING SAID IMPLANT
ELEMENT DE RETENUE POUR IMPLANT ET AMPOULE POUR CONSERVER LEDIT IMPLANT

(30) Priorität: 02.06.1997 CH 131497
(43) Veröffentlichungstag der Anmeldung: 22.03.2000
(73) Patentinhaber: INSTITUT STRAUMANN AG, 4437 Waldenburg (CH)
(72) Erfinder: SCHMUTZ, Werner, CH-4435 Niederdorf (CH); SIMPSON, James, Percival, CH-4458 Eptingen (CH)
(74) Vertreter: Modiano, Guido, Dr.-Ing.
(86) Internationale Anmeldenummer: PCT/CH1998/000218
(87) Internationale Veröffentlichungsnummer: WO 1998/055039

(56) Entgegenhaltungen:
- US-A- 5 062 800
- US-A- 5 368 160
- US-A- 5 538 428

## Beschreibung

Die Erfindung betrifft ein Halteelement gemäß Anspruch 1 eine Kombination gemäß Anspruch 5 und eine Ampulle zum Transport gemäß Anspruch 6.

### Anwendungsgebiet der Erfindung

Die vorliegende Erfindung betrifft ein Halteelement für ein Implantat, vorrangig in Schrauben- oder Zylinderform. Ein erster in Betracht kommender lmplantattyp weist am Implantatkopf eine zumindest im Prinzip axial austretende Bohrung mit einem Innengewindeabschnitt auf. Die Mündung der Bohrung wird von einer Implantatschulter umgeben, die den oberen Abschluss des Implantats bildet. Der zweite geeignete Implantattyp besitzt ein die Implantatschulter überragendes Segment mit einem Innengewindeabschnitt. Vorrangig hat das Segment einen Aussenvielkant oder eine konische Aussenkontur. Solche Implantate werden beispielsweise im Dentalbereich oder in der Knochenchirurgie eingesetzt. Das Implantat ist dazu bestimmt, in eine im Knochen vorbereitete Aufnahmebohrung eingesetzt - d.h. eingeschraubt oder eingedrückt - zu werden. Dies richtet sich danach, ob die Aufnahmebohrung ein Innengewinde hat oder das Implantat ein selbstschneidendes Gewinde besitzt bzw. das Implantat gewindelos ist. Ferner bezieht sich die Erfindung auf eine Ampulle, in welcher das Implantat aufbewahrt ist.

Das Halteelement ist während mehrerer Herstellungsphasen der Implantate zu deren Bereitstellung vor der chirurgischen Operation und unmittelbar beim Implantieren anwendbar. Das massgebliche Anwendungsgebiet der Erfindung liegt dort, wo die Implantate, z.B. aus Gründen erforderlicher steriler Arbeitsweise, zumindest nicht direkt mit den Händen erfasst werden dürfen, und wo es darauf ankommt, die Implantate sicher zu halten.

Das Halteelement ist auch innerhalb einer speziellen Ampulle verwendbar, die zum Transport und zur Aufbewahrung des Implantats dient. Das Implantat ist aus der Ampulle während der chirurgischen Operation unter sterilen Bedingungen mit einem angesetzten Werkzeug entnehmbar und mit diesem Werkzeug dann in die Aufnahmebohrung im Knochen einsetzbar. Zur Gewährleistung einer sterilen Arbeitsweise wird die Ampulle bis zum Operationsbeginn in einer Sekundärkapsel aufbewahrt.

### Stand der Technik

Der erstgenannte Implantattyp wird z.B. in der Monographie von SCHROEDER/SUTTER/BUSER/KREKELER: Oral Implantology, Georg Thieme Verlag Stuttgart und New York, 2. Aufl., 1996, S. 124-143, und in der WO-A-96 19947 beschrieben. Der zweite Implantattyp mit dem äusseren, die Implantatschulter überragenden Segment, ist z.B. in der WO-A-91 10410 und der US-A-5 538 428 gezeigt. Für das Handling dieser Implantate werden verschiedene Manipulierorgane benutzt, wo die Implantate beim Ergreifen formund/oder kraftschlüssig erfasst werden.

Hinsichtlich Ampullen, wo sterile Bedingungen einzuhalten sind, besteht folgende Situation: grundsätzlich lassen sich auch die Ampullen nach zwei Typen unterscheiden. Bei einem ersten Typ ist das in der Ampulle aufbewahrte Implantat mit dem Deckel verbunden, der direkt oder indirekt zugleich als Eindrehwerkzeug fungiert und zumindest für ein ansatzweises Eindrehen des Implantats benutzt wird. Gemäss der US-A-4 856 648 besitzt der Deckel in der einfachsten Form einen Fortsatz mit einer nicht-rotationssymmetrischen Eingriffskontur, die mit einer am Implantatkopf komplementären Kontur zusammenwirkt. Aus der US-A-5 312 254 und der US-A-5 538 428 ist es bekannt, zwischen dem Deckel und dem Implantat ein Verbindungselement einzufügen, welches die drehende Einschraubbewegung überträgt. In der US-A-5 062 800 ist eine Ampulle offenbart, wo der Deckel das Verbindungselement zum Eindrehwerkzeug darstellt. Diese Ampullen sind teils recht aufwendig, wobei die Werkzeugkomponenten in der Regel nur einmalig benutzt werden Häufig sind auch relativ viele Handgriffe im Umgang mit diesen Ampullen erforderlich, und man benötigt zusätzlich noch externe Eindrehwerkzeuge. Schliesslich ist es fraglich, ob die Implantate von den Schraubdeckeln bzw. den Verbindungselementen ausreichend sicher erfasst werden.

Beim zweiten Typ muss das in der Ampulle angeordnete Implantat mit einem externen Werkzeug erfasst und eingedreht werden. Mit diesem Typ von Ampullen befasst sich die hiesige Erfindung. Die EP-B-0 231 730 offenbart eine simple Variante, wo das Implantat in einer Hülse steckt und der Implantatkopf ein Hülsenende überragt und verschliesst. Die Hülse ist in einer Glasampulle eingeschmolzen, die Einschnürungen und eine innere Feder besitzt. Der Implantatkopf stützt sich gegen die Feder ab, und die Hülse wird innerhalb der Einschnürungen fixiert, wobei eine Einschnürung den Hülsenboden zumindest partiell verschliesst. Zum Ergreifen des Implantats benutzt man entsprechende externe Werkzeuge, wobei an der Ampulle keinerlei Mittel vorgesehen sind, die das Entnehmen des Implantats aus der Ampulle und das Transportieren zum Ort der Implantation erleichtern und sicherer gestalten.

Ein solcher Typ von Ampullen mit sterilen Bedingungen wird auch bei SCHROEDER/SUTTER/BUSER/KREKELER, a.a.O., S. 219-221, offenbart. Die kapselförmige Ampulle besitzt einen abnehmbaren Deckel und eine nahe dem Deckel sich senkrecht zur Längsachse erstreckende Zwischenwand. In dieser Zwischenwand ist ein Axialdurchgang vorhanden, in dem ein Lagerring sitzt, in welchem der Kopf des Implantats steckt, während die apikale Partie des Implantats in die Ampulle hineinragt. Um das implantat zu erfassen, setzt man ein konterbares Eindrehwerkzeug an, dessen Gewindedorn in die im Implantatkopf vorhandene sacklochförmige, axiale Gewindebohrung eingedreht wird. Am Eindrehwerkzeug angeschraubt, wird das Implantat nun aus der Ampulle herausgezogen. Dann bringt man das Implantat in die Bohrung im Knochen ein, wobei Schlüssel am Eindrehwerkzeug angesetzt werden. Schliesslich muss die Konterung zwischen dem Implantat und dem Eindrehwerkzeug wieder gelöst werden, damit sich das Eindrehwerkzeug ausdrehen lässt. Dieses Handling erfordert zahlreiche Arbeitsgänge, ein mehrteiliges Instrumentarium und besondere Achtsamkeit sowie Geschicklichkeit des Chirurgen. Die beim Einbringen der Implantate in den Knochen angesetzten Instrumente sind als Manipulierorgane während des gesamten Produktionsprozesses der Implantate ungeeignet; hierzu müssen separate Halterungen eingesetzt werden.

### Aufgabe der Erfindung

Angesichts der vorgenannten Nachteile der bis dato bekannten Vorrichtungen zum Ergreifen und Halten von Implantaten der vorgenannten beiden Typen liegt der Erfindung das Problem zugrunde, derartige Vorrichtungen zu vervollkommnen. Hierbei gilt es, die Verbindung zwischen dem Implantat und dem Halteelement effizient herstellbar, vielfach nutzbar, sicher und schliesslich unproblematisch wieder lösbar zu gestalten. In der vorbereitenden Phase der chirurgischen Operation und während der Operation muss gewährleistet sein, dass die zur Anwendung gebrachten Implantate stets sicher geführt werden können, sich keinesfalls unkontrolliert lösen und die Sterilitätsanforderungen erfüllt sind. Das Halteelement soll die Entnahme des Implantats aus der Ampulle mit dem angesetzten Eindrehwerkzeug und das Einsetzen des Implantats in den Knochen wesentlich vereinfachen.

Bezogen auf die Ampulle besteht die Aufgabe, diese derart weiter zu entwickeln, dass das Implantat darin sicher gehaltert ist und unter sterilen Bedingungen mit einem einfach anzusetzenden Eindrehwerkzeug unkompliziert entnehmbar ist. Bei der ordentlichen Entnahme des Implantats aus der Ampulle soll die Gefahr einer Berührung zwischen Implantat und Ampulle im Prinzip ausgeschlossen sein, um eine Verunreinigung oder Beschädigung der enossalen lmplantatoberfläche zu vermeiden. Vorzusehen ist, dass die Ampulle für Lagerung und Transport in eine herkömmliche Aussenkapsel einsetzbar ist. Überdies soll sich die Ampulle als Einwegartikel materialsparend und insgesamt kosteneffizient herstellen lassen.

### Übersicht über die Erfindung

Das Halteelement besteht aus einem Hülsenteil und einer durch das Hülsenteil hindurch ragenden, drehbaren und begrenzt axial beweglichen Schraube. Das Hülsenteil weist unten eine zylindrische Schulterpartie auf, welche mit einer nach unten gewandten. zur Implantatschulter komplementären Gegenschulter abschliesst, Über der Schulterpartie erstreckt sich ein aufwärts gerichtetes Aussenvielkant-Segment. Durch das Hülsenteil verläuft eine Axialbohrung zum Durchtritt des Schafts der Schraube. In einer vorteilhaften Ausgestaltung weist die Axialbohrung einen Innengewindeabschnitt auf.

Die Schraube besteht aus dem unteren Schraubenschaft, der sich daran anschliessenden Fixierpartie und dem oberen Fortsatz, vorzugsweise mit einem Aussenvielkant. Der Schraubenschaft unterteilt sich in das am freien Ende vorhandene Aussengewindeteil und das daran ansetzende Zylinderteil. Die Fixierpartie besitzt zwischen einem ersten und einem zweiten zylindrischen Bund eine Ringnut. Sind Hülsenteil und Schraube zum Halteelement zusammengesetzt, hat man zuvor das Aussengewindeteil des Schraubenschafts durch den Innengewindeabschnitt geschraubt, so dass das Aussengewindeteil die Gegenschulter des Hülsenteils überragt und das Zylinderteil des Schraubenschafts dann innerhalb des Innengewindeabschnitts liegt. So montiert ist das Hülsenteil zwischen Aussengewindeteil und diesem zugewandten ersten Bund axial verschiebbar.

Hat man das Halteelement auf ein Implantat aufgeschraubt, sitzen die Gegenschulter des Hülsenteils komplementär auf der Implantatschulter und der erste Bund auf dem Aussenvielkant-Segment auf. Das Aussengewindeteil des Schraubenschafts greift in die Innengewindebohrung im Implantatkopf ein.

Der Aussenvielkant des Fortsatzes der Schraube dient vorrangig zum Ergreifen des mit dem Implantatkopf verbundenen Halteelements mittels eines Eindrehwerkzeugs, um das Implantat ohne direkte Berührung aus der Ampulle zu entnehmen, zum Einsatzort zu transferieren und dort zu implantieren. Die Ringnut an der Fixierpartie der Schraube ist insbesondere zum einrastenden Eingriff einer Fixierpartie an der Ampulle bestimmt, um das vom Halteelement getragene Implantat in einer Ampulle lösbar und hängend zu arretieren. Das Aussenvielkant-Segment des Hülsenteils ist vorrangig zum Ansetzen eines Löseschlüssels beim Entkontern des mit dem Implantat verschraubten Halteelements vorgesehen.

Wird das Halteelement bereits während der Herstellung des Implantats am Implantatkopf angebracht, bietet das Halteelement die Möglichkeit, daran Manipulierorgane für die weitere Bearbeitung des Implantats anzusetzen. Somit vereinfacht sich das Handling der Implantate schon während ihrer Herstellung In der weitreichendsten Anwendung und Ausgestaltung wird das Halteelement bereits während der Herstellung des Implantats mit diesem verbunden, so dass sich dann gesamthaft folgende Funktionen ergeben:
a) Ergreifen bzw. Haltern des Implantats für die abschliessenden Herstellungsphasen; und
b) Arretieren des Implantats innerhalb einer Ampulle; und
c) Ansetzen eines Eindrehwerkzeugs für das Implantieren des Implantats in den Knochen.

Hat man das Einsetzen des Implantats in den Knochen an sich beendet, ist das benutzte Eindrehwerkzeug vom Fortsatz abziehbar. Mittels eines Löseschlüssels wird das fest auf der lmplantatschulter aufsitzende Hülsenteil entkontert, darauf die Schraube aus der Innengewindebohrung im implantatkopf ausgeschraubt, so dass sich das Halteelement vom Implantat löst.

Die konstruktiven Besonderheiten der im Prinzip zylindrischen Ampulle bestehen darin, dass diese seitlich offen ist und eine Fixierpartie aufweist, in der das Implantat direkt oder indirekt gehalten wird. Beim Entnehmen des Implantats aus der Ampulle zieht man dieses seitlich heraus. In einer vorteilhaften Version nimmt die Fixierpartie ein mit dem Implantatkopf verbundenes Halteelement klemmend auf, so dass das Implantat vom Halteelement getragen wird und die Wandung der Ampulle nicht berührt. An einem freien Fortsatz des Halteelements ist direkt ein Eindrehwerkzeug oder ein Adapter für ein Eindrehwerkzeug ansetzbar, mit dem das Implantat berührungslos aus der Ampulle entfernt werden kann. Die Ampulle ist in eine herkömmliche Aussenkapsel einsetzbar.

Dank dem erfinderischen Halteelement vereinfachen sich das Handling der gattungsmässigen Implantate während der Herstellung und die Implantation selbst. Ein Implantat kann am Halteelement erfasst werden, und Manipulierorgane sowie Eindrehwerkzeuge sind sowohl unproblematisch ansetzbar als auch lösbar In Kombination mit dem Halteelement erreicht man, dass die Ampulle nicht aus dem Material des Implantats bestehen oder einen speziell schützenden Einsatz aus dem Implantatmaterial enthalten muss. Durch die Gestalt der erfindungsgemässen Ampulle und die Art der Aufhängung des Implantats innerhalb der Ampulle mittels des Halteelements sind die Gefahren einer Kontamination oder Beschädigung der Implantatoberfläche erheblich reduziert. Ferner kommt die Ampulle beim Auskippen aus der Aussenkapsel auf eine sterile Unterlage auf dem Operationstisch, angesichts des ausserhalb der Längsachse liegenden Gewichtsschwerpunkts, schnell zur Ruhe und neigt nicht mehr zum Wegrollen. Schliesslich lässt sich die Ampulle mit dem Implantat aufgrund der der Fixierpartie gegenüberliegenden Standpartie stabil aufstellen, so dass das Ansetzen der Werkzeuge erleichtert wird.

### Kurzbeschreibung der beigefügten Zeichnungen

Mit Bezug auf die beiliegenden Zeichnungen erfolgt nachstehend die detaillierte Beschreibung je eines Ausführungsbeispiels des erfindungsgemässen Halteelements für die beiden Implantattypen und der Ampulle zur Aufbewahrung des Implantats. Abschliessend werden mögliche Modifikationen erwähnt. Es zeigen:
- Figur 1A:: den ersten Typ eines gattungsmässigen Implantats in Form einer Vollschraube als Schnittdarstellung;
- Figur 1B:: den ersten Typ eines gattungsmässigen Implantats in Form eines Hohlzylinders als Schnittdarstellung;
- Figur 1C:: den ersten Typ eines gattungsmässigen Implantats in Form eines Hohlzylinders mit abgewinkeltem Implantatkopf als Schnittdarstellung;
- Figur 1 D:: den zweiten Typs eines gattungsmässigen Implantats in Form einer Vollschraube als Perspektivdarstellung;

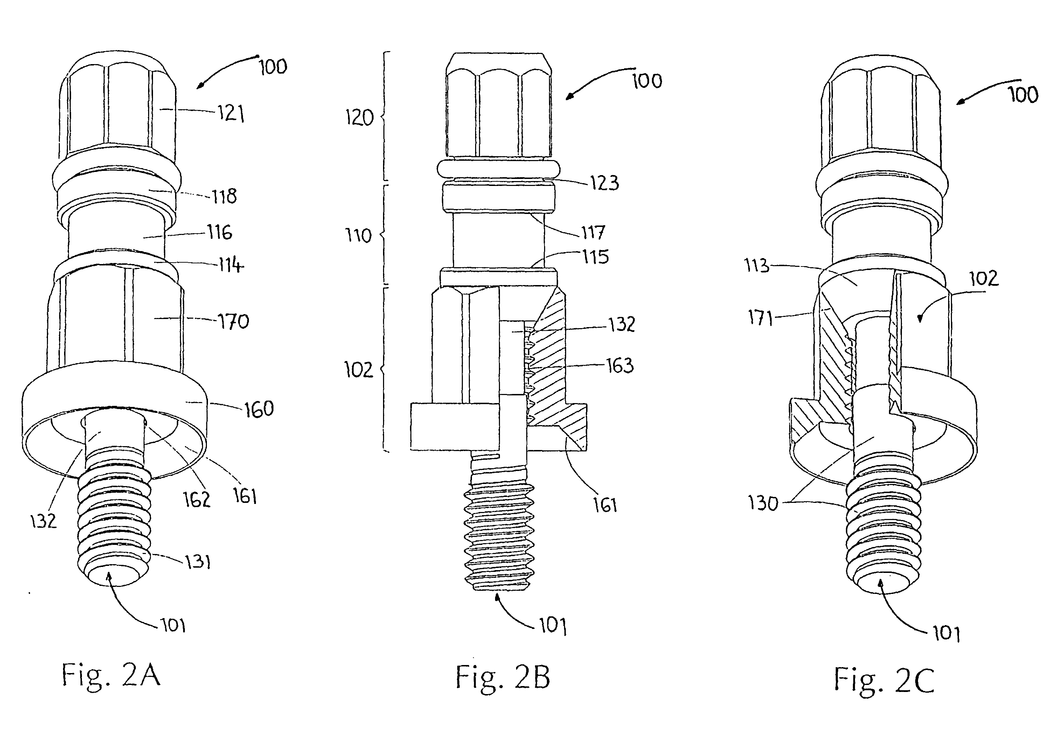

- Figur 2A:: ein erfindungsgemässes Halteelement mit einem Hülsenteil erster Version für den ersten Typ von Implantaten gemäss den Fig. 1A bis 1 C in der Perspektivansicht;
- Figur 2B:: das Halteelement gemäss Fig. 2A in der Frontansicht als Teilschnitt
- Figur 2C:: das Halteelement gemäss Fig. 2A in der Perspektivansicht als Teilschnitt;
- Figur 3A:: das Halteelement gemäss Fig. 2A verbunden mit einem Implantat gemäss Fig. 1A in der Perspektivansicht als Teilschnitt;
- Figur 3B:: das Halteelement mit einem Hülsenteil zweiter Version verbunden mit dem zweiten Typ von Implantaten gemäss Fig. 1D in der Perspektivansicht als Teilschnitt;

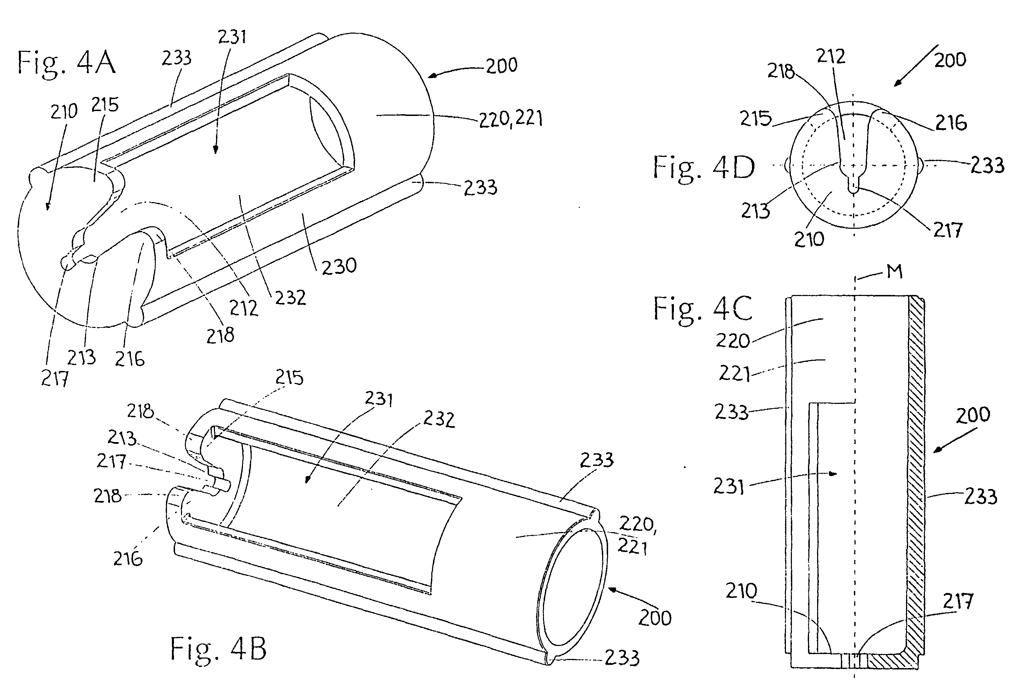

- Figur 4A:: eine erfindungsgemässe Ampulle in der Perspektivansicht auf die Aussenseite der Fixierpartie;
- Figur 4B:: die Ampulle gemäss Fig. 4A in der Perspektivansicht auf die Innenseite der Fixierpartie;
- Figur 4C:: die Ampulle gemäss Fig. 4A als Teilschnitt in der Frontansicht;
- Figur 4D:: die Ampulle gemäss Fig. 4A in der Draufsicht auf die Aussenseite der Fixierpartie;
- Figur 5:: die Ampulle gemäss Fig. 4A mit Halteelement mit Hülsenteil erster Version gemäss Fig. 2A und Implantat ersten Typs gemäss Fig. 1A von einer Aussenkapsel umgeben im Längsschnitt;
- Figur 6A:: einen an sich bekannten Ratschenadapter in der Perspektivansicht als Teilschnitt;
- Figur 6B:: den Ratschenadapter gemäss Fig. 6A in der Frontansicht als Teilschnitt;
- Figur 7:: einen an sich bekannten Löseschlüssel in Perspektivansicht;
- Figuren 8A bis 8J:: das prinzipielle Handling der in einer Aussenkapsel befindlichen Ampulle gemäss Fig. 5 mit einem Implantat ersten Typs gemäss Fig. 1A und Halteelement gemäss Fig. 2A bis zum Einsetzen des Implantats in den Knochen;

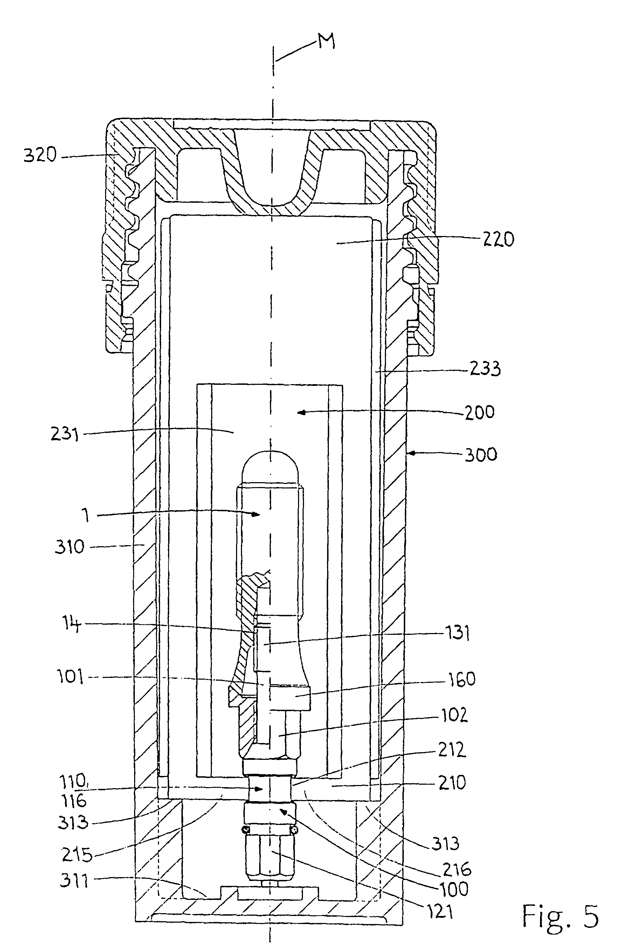

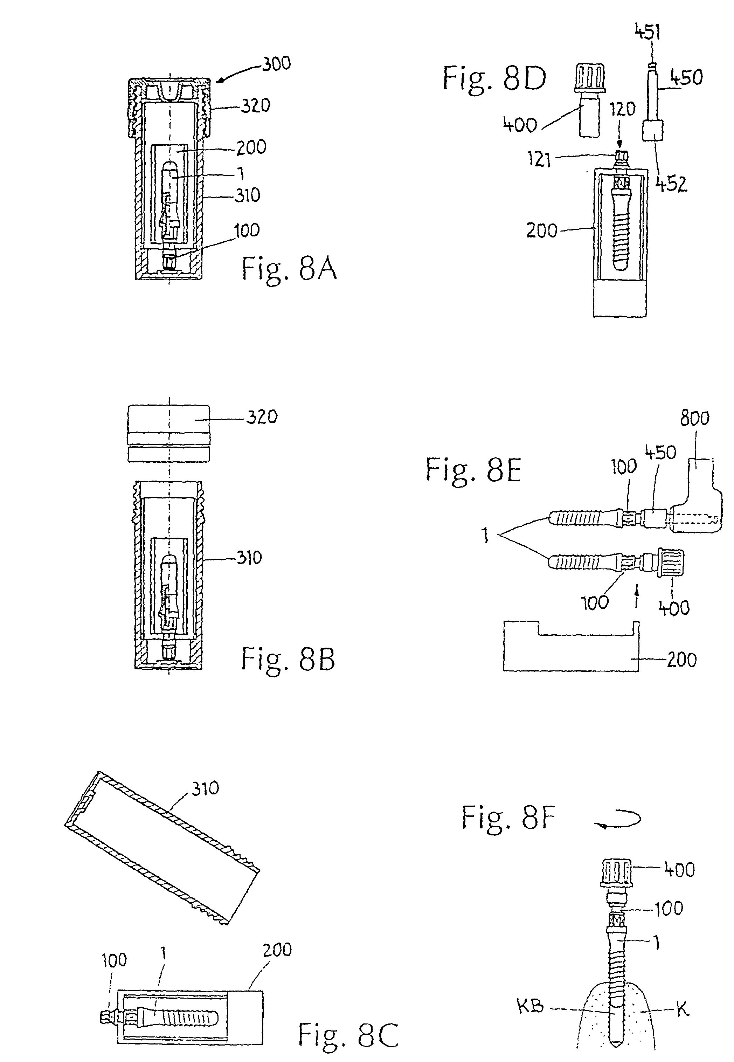

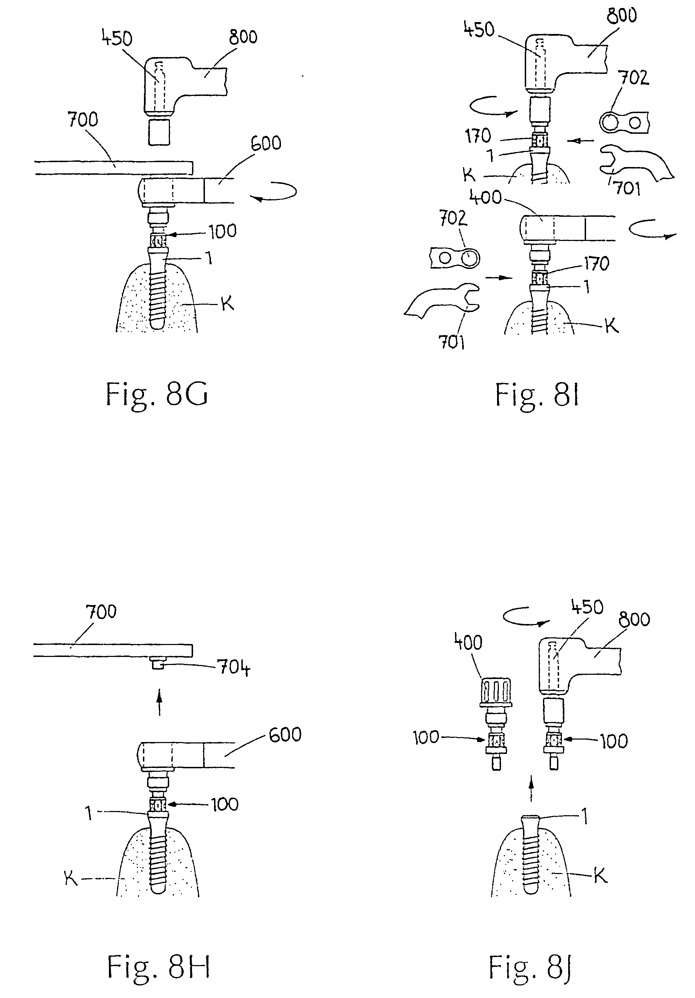

- Figur 8A:: *Schritt 1* - Ausgangssituation; Ampulle mit vom Halteelement arretierten Implantat, von einer verschlossenen Aussenkapsel umgeben, im Längsschnitt gemäss Fig. 5;
- Figur 8B:: *Schritt 2 -* Öffnen der Aussenkapsel durch Abnehmen des Verschlussdeckels;
- Figur 8C: *Schritt 3* - Auskippen der Ampulle aus der Aussenkapsel:
- Figur 8D:: *Schritt 4-* Bereitstellung der jeweiligen Adapter für die alternativen Eindrehwerkzeuge zum Ansetzen an das Halteelement;
- Figur 8E:: *Schritt 5* - Entnahme des Implantats mit an das Halteelement alternativ angesetztem Ratschenadapter bzw. motorisch angetriebenem, zahnärztlichem Winkelhandstück;
- Figur 8F:: *Schritt 6 -* an das Halteelement alternativ angesetzter Ratschenadapter und Einsetzen des Implantats in den Knochen;
- Figur 8G:: *Schritt* 7 - Eindrehen des Implantats in den Knochen alternativ mittels Ratsche und Führungsschlüssel oder mittels Winkelhandstück;
- Figur 8H:: *Schritt 8* - nach beendetem Eindrehen des Implantats Entfernen des Führungsschlüssels vom Ratschenadapter;

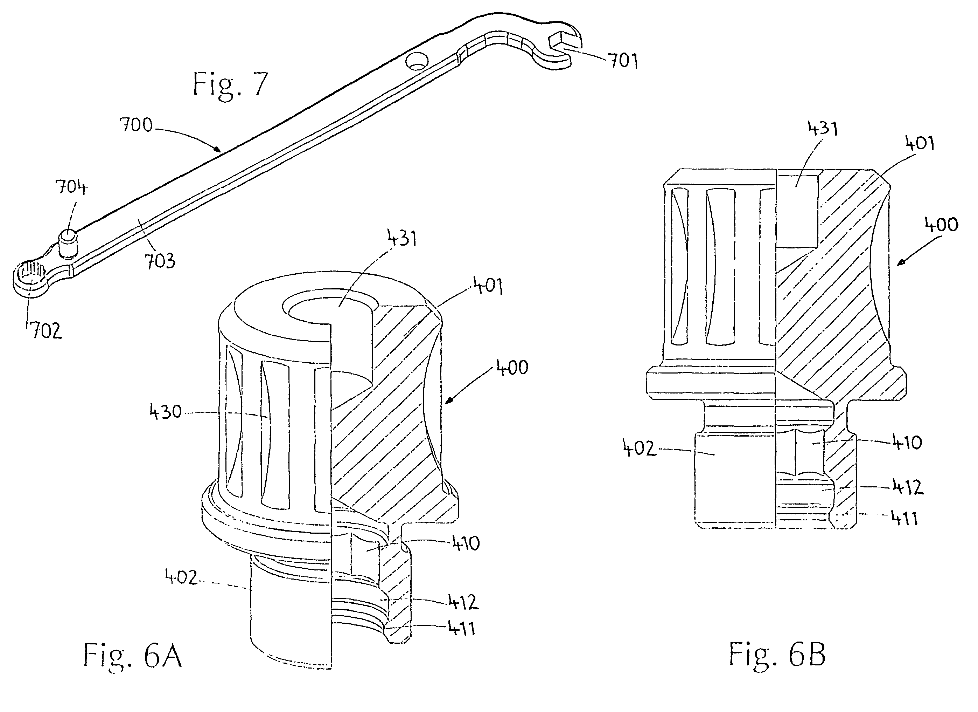

- Figur 8I:: *Schritt 9* - Heranführen des Löseschlüssels gemäss Fig. 7 an das Halteelement zum Entkontern; und
- Figur 8J:: *Schritt 10 -* Entfernen des gelösten Halteelements vom Implantatkopf.

### Ausführungsbeispiele

Für die gesamte weitere Beschreibung gilt folgende Festlegung: Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 1A

Das Implantat 1 des ersten Typs hat hier die Gestalt einer Vollschraube und besitzt oben den trompetenförmig erweiterten Implantatkopf **10,** welcher zuoberst mit der konischen Implantatschulter **11** abschliesst. Die Implantatschulter **11** umgibt eine hier mündende, sich nach aussen erweiternd öffnende Konusbohrung **12,** die sich unterhalb des Bohrungsgrundes **13** weiter abwärts als Gewindebohrung **14** fortsetzt Unterhalb des Implantatkopfes **10** erstreckt sich nach apikal die zum Einsetzen im Knochen bestimmte Wurzelpartie **15**, weiche das Aussengewinde **16** aufweist und mit der Implantatspitze **17** endet. Die Gewindebohrung **14** dient der Aufnahme des Gewindeteils eines nicht dargestellten Abutments, während von der Konusbohrung **12** der Konuskegel des Abutments aufgenommen wird. Herkömmlich besteht das Implantat **1** aus Titan und besitzt äusserlich einen die Osseointegration fördernden Implantatmantel **18** mit einer speziellen Oberflächenstruktur.

### Figuren 1B und 1C

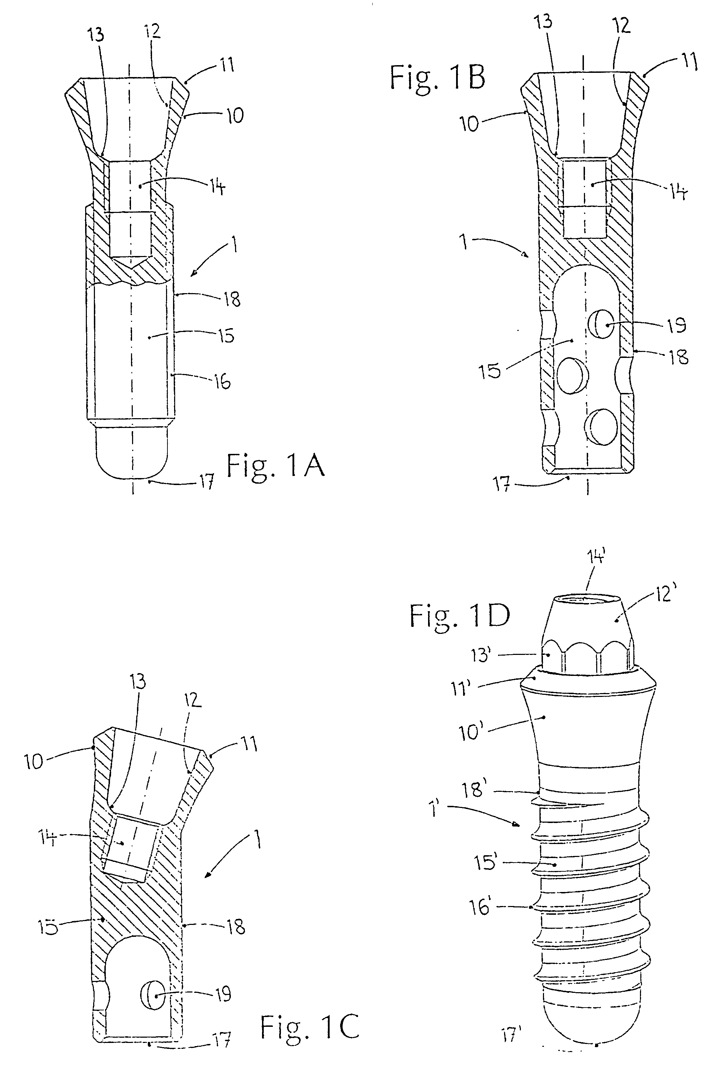

Beim Implantat **1** gemäss Fig. 1B handelt es sich um einen Hohlzylinder, dessen Wurzelpartie **15** hohl ist und im Implantatmantel **18** mehrere durchgängige, periphere Knochenintegrationsbohrungen **19** aufweist, die ein Durchwachsen des sich regenerierenden Knochens erlauben, was zu einer festen Verankerung im Knochen führt. Der Hohlzylinder besitzt kein Aussengewinde, aber äusserlich des Implantatmantels **18** ebenfalls die spezielle Oberflächenstruktur. Das implantat **1** gemäss Fig. 1C unterscheidet sich vom Hohlzylinder der Fig. 1B nur dadurch, dass der Implantatkopf **10** abgewinkelt an die Wurzelpartie **15** ansetzt.

### Figur 1D

Dieses einteilige Implantat **1'** zweiten Typs hat hier z.B. auch die Gestalt einer Vollschraube und unterscheidet sich von der Konfiguration gemäss Figur 1A nur in der Beschaffenheit des Implantatkopfes **10'.** Es entfallen beim zweiten Typ die Konusbohrung **12,** der Bohrungsgrund **13** und die Gewindebohrung **14.** Analog zum ersten Typ sind aber die Implantatschulter **11',** die Wurzelpartie **15'.** das Aussengewinde **16',** die Implantatspitze **17'** und der Implantatmantei **18'** vorhanden. Anstelle der Innenkonfiguration mit der Konusbohrung **12** weist der zweite lmplantattyp **1'** ein die Implantatschulter **11'** überragendes, maskulines Segment **12'** auf, das aus dem Implantat **1'** axial und zentrisch austritt sowie sich vom Implantat **1'** wegweisend konisch verjüngt. Zur Positionierung der weiteren Aufbauten ist am Segment **12'** eine nicht-rotationssymmetrische Kontur **13',** in Form eines Aussenvielkants vorhanden. Vorzugsweise befindet sich die nicht-rotationssymmetrische Kontur **13'** am Übergang zur Implantatschulter **11'**. Für weitere lmplantataufbauten besitzt das Segment **12'** eine axial eintretende Gewindebohrung **14'**.

### Figuren 2A bis 2C

Das dargestellte Halteelement **100** ist für den ersten lmplantattyp **1** mit der Konusbohrung **12** vorgesehen. Ein Hülsenteil **102** und eine durch das Hülsenteil **102** hindurch ragende, drehbare und begrenzt axial bewegliche Schraube **101** sind die beiden Bestandteile des Halteelements **100.** Unten besitzt das Hülsenteil **102** eine zylindrische Schulterpartie **160,** welche mit einer nach unten gewandten, zur lmplantatschulter **11** komplementären Gegenschulter **161** abschliesst. Von der Schulterpartie **160** axial aufwärts erstreckt sich ein Aussenvielkant-Segment **170.** Durch das Hülsenteil **102** verläuft eine Axialbohrung **162** mit einem innengewindeabschnitt **163** zum Durchtritt des Schafts **130** der Schraube **101**.

An den Schraubenschaft **130** schliesst sich eine Fixierpartie **110** und an diese der oben endende Fortsatz **120** mit einem Aussenvielkant **121** an. Der Schraubenschaft **130** unterteilt sich in das am freien Ende vorhandene Aussengewindeteil **131** und das daran ansetzende Zylinderteil **132**. Die Fixierpartie **110** weist einen ersten **114** und einen zweiten zylindrischen Bund **118** auf, zwischen denen ein im Durchmesser reduzierter Zylinderabschnitt **116** liegt. Die Bunde **114,118** sind gegenüber dem Durchmesser des Schrauben schafts **130** erweitert. Am Übergang zwischen dem Zylinderteil **132** und dem ersten Bund **114** ergibt sich eine Konusschulter **113,** die zum formschlüssigen, axialen und zirkulären Anliegen an der oberen konischen Aufsetzschulter **171** am Aussenvielkant-Segment 170 bestimmt ist. Jeweils an den Übergängen vom Zylinderabschnitt **116** zum ersten und zum zweiten Bund **114,118** ergeben sich Ringschultern **115,117.** Der Zylinderabschnitt **116** mit den zwei angrenzenden Ringschultern **115,117** stellt die Fixierpartie **110** des Halteelements **100** dar. Der zapfenartige Fortsatz **120** weist als nicht-rotationssymmetrische Kontur den Aussenvielkant **121** auf, auf den ein Werkzeug, z.B. ein Eindrehwerkzeug. aufsteckbar ist. Zur Hemmung der Steckverbindung zwischen dem Aussenvielkant **121** und dem adaptierten Werkzeug ist am Fortsatz **120**, zwischen dem zweiten Bund **118** und dem Aussenvielkant-Segment **170** eine Radialnut **123** vorhanden, um darin ein Sicherungselement - vorzugsweise einen O-Ring - anzuordnen.

Um das Hülsenteil **102** und Schraube **101** zum Halteelement **100** zusammenzusetzen, muss man das Aussengewindeteil **131** des Schraubenschafts **130** durch den Innengewindeabschnitt **163** schrauben, so dass das Aussengewindeteil **131** die Gegenschulter **161** des Hülsenteils **102** überragt und das Zylinderteil **132** des Schraubenschafts **130** dann innerhalb des Innengewindeabschnitts **163** liegt. So montiert ist das Hülsenteil **102** zwischen Aussengewindeteil **131** und diesem zugewandten ersten Bund **114** axial verschiebbar.

### Figur 3A

Ist das Halteelement **100** auf ein Implantat 1 aufgeschraubt - hier ein Implantat **1** des ersten Typs und somit ein dazu korrespondierendes Halteelement **100** erster Version -, sitzen die Gegenschulter **161** der Schulterpartie **160** des Hülsenteils **102** passgerecht auf der Implantatschulter **11** und die Konusschulter **113** des ersten Bundes **114** auf der Aufsetzschulter **171** des Aussenvielkant-Segments **170** auf. Das Aussengewindeteil **131** des Schraubenschafts **130** der Schraube **101** greift in die innengewindebohrung **14** im Implantatkopf **10** ein und das gewindelose Zylinderteil **132** des Schraubenschafts **130** durchragt den Innengewindeabschnitt **163** innerhalb des Hülsenteils **102.**

### Figur 3B

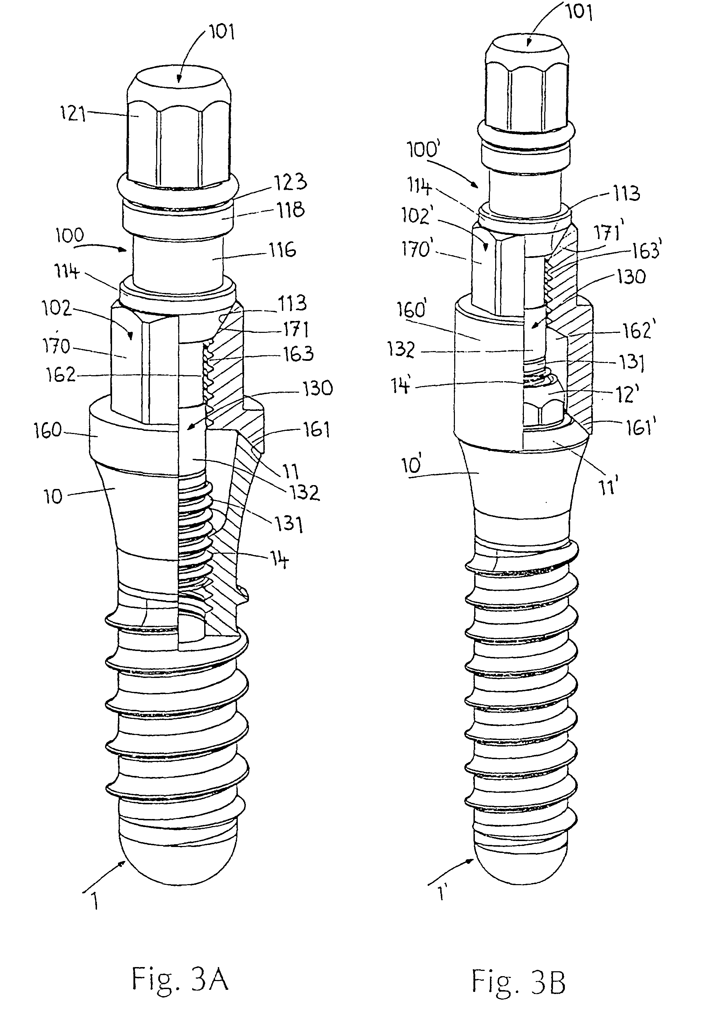

Hier ist ein Implantat **1'** des zweiten Typs - mit einem die Implantatschulter **11'** überragenden maskulinen Segment **12'** - mit einem zugehörigen Halteelement **100'** zweiter Version verbunden. Um das Segment **12'** innerhalb der Schulterpartie **160'** aufzunehmen, ist diese gegenüber der ersten Version erhöht und die durch das Hülsenteil **102'** hindurch gehende Axialbohrung **162'** ist im Bereich der Schulterpartie **160'** erweitert. Ansonsten besteht zur Anordnung gemäss Figur 3A Analogie; so sitzen wiederum die Gegenschulter **161'** der Schulterpartie **160'** des Hülsenteils **102'** passgerecht auf der Implantatschulter **11'** und die Konusschulter **113** des ersten Bundes **114** auf der Aufsetzschulter **171'** des Aussenvielkant-Segments **170'** auf. Das Aussengewindeteil **131** des Schraubenschafts **130** der Schraube **101** ist mit der Innengewindebohrung **14'** in Eingriff, welche sich vom Segment **12'** in den Implantatkopf **10'** hinein erstreckt. Das gewindelose Zylinderteil **132** des Schraubenschafts **130** durchragt den Innengewindeabschnitt **163'** innerhalb des Hülsenteils **102'.**

Mit Vorteil verbindet man das Halteelement **100,100'** schon im Verlauf der Herstellung des Implantats **1,1'** mit diesem, so dass das Halteelement **100,100'** bereits während der nachfolgenden Herstellungsphasen die Möglichkeit bietet, daran Manipulierorgane anzusetzen oder als Träger beim Einstellen der Implantate in Vorrichtungen benutzt zu werden. Für das Ansetzen von Manipulierorganen eignen sich der Fortsatz **120** sowie die Fixierpartie **110.** Da das Hülsenteil **102,102'** auf das Implantat **1,1'** aufgesetzt wird, bestehen beide vorzugsweise aus dem gleichen Material, z.B. Titan, während sich als Material für die Schraube **101** z.B. rostfreier Stahl anbietet.

### Figuren 4A bis 4D

Die im Prinzip zylindrische Ampulle **200** zur Aufnahme eines Implantats **1.1'** besitzt auf der ersten Grundflächenseite eine Fixierpartie **210** und auf der gegenüber liegenden, zweiten Grundflächenseite eine Standpartie **220**. Zwischen der Fixierpartie **210** und der Standpartie **220** erstreckt sich der Zylindermantel **230,** in welchem eine grossflächige Aussparung **231** vorgesehen ist, die von der Fixierpartie **210** bis zur Standpartie **220** verläuft und sich z.B. über ein Viertel bis zur Hälfte des radialen Umfangs der Ampulle **200** ausdehnt. Durch diese seitliche Aussparung **231** ist das in der Ampulle **200** gehalterte implantat **1,1'** herausziehbar. Somit besitzt der im Bereich der Aussparung **231** verbleibende Zylindermantel **230** die Gestalt einer offenen Schale **232,** während in der Standpartie **220** der Zylindermantel **230** ganz erhalten ist und hier quasi einen Rohrabschnitt **221** ergibt. Die zweite Grundflächenseite ist vorzugsweise offen.

Die Aussparung **231** reicht bis an die Fixierpartie **210** heran, welche die Form einer kreisrunden Abschlussplatte hat, so dass die zugehörige erste Grundflächenseite weitgehend geschlossen ist und der Zylindermantel **230** senkrecht auf der Fixierpartie **210** seht. In der Fixierpartie **210** befindet sich eine lateral offene Einbuchtung **212,** wobei diese zusammen mit der Aussparung **231** in die gleiche Richtung weist. Die Einbuchtung **212** ist im Prinzip schlitzförmig mit Abrundungen **218** am peripheren Eintritt. Nahe der theoretischen Mittelachse **M** hat die Einbuchtung **212** eine Einschnürung **213**, hinter welcher sich die Einbuchtung **212** halbkreisartig erweitert. Hierdurch entstehen an der Fixierpartie **210** zwei gegenüber liegende, maulartige Backen **215,216**. Über die Einbuchtung **212** hinaus, weiter in die Fixierpartie **210** einschneidend zum Zylindermantel **230** hin, ist eine Dehnungsnut **217** vorgesehen, so dass beim Ein- und Ausdrücken eines Implantats **1,1'** bzw. eines das Implantat **1,1'** tragenden Halteelements **100,100'** zwischen die Backen **215,216**, sich diese besser elastisch spreizen lassen. Nachdem beim Eindrücken des Halteelements **100,100'** die Einschnürung **213** dessen Querschnitt überwunden hat, rastet das Halteelement **100,100'** in der Einbuchtung **212** ein und die Backen **215,216** verengen sich wieder.

Der Gewichtsschwerpunkt der Ampulle **200** liegt durch die asymmetrische Materialverteilung ausserhalb der Mittelachse **M**, so dass eine liegende und dabei hin und her rollende Ampulle **200** schnell zur Ruhe kommt. Um ein Fortrollen der Ampulle **200** von der Unterlage zusätzlich zu verhindern, ist äusserlich am Zylindermantel **230,** axial und parallel zu den Kanten der Aussparung **231** je eine Wulst **233** vorgesehen. Die sich zwischen beiden Wülsten **233** aufspannende Ebene teilt die rohrförmige Ampulle **200** längs in zwei Hälften. Mit der Standpartie **220** nach unten lässt sich die Ampulle **200** auf der zweiten Grundflächenseite vertikal aufstellen. Als Material für die Ampulle **200** eignet sich ein bioverträglicher Kunststoff.

### Figur 5

Diese Figur wird mit dem Implantat **1** und dem Halteelement **100** beschrieben. Analog könnte auch das Implantat **1'** zweiten Typs in Verbindung mit einem Halteelement **100'** zweiter Version Verwendung finden.

Im komplettierten Zustand ist die Ampulle **200** mit dem darin vom Halteelement **100** gehaltenen Implantat **1** in eine Aussenkapsel **300** eingesetzt. Die Aussenkapsel **300** besteht aus einem hohlen Zylinder **310,** dessen Boden **311** geschlossen ist, und einem aufschraubbaren Verschlussdeckel **320.** Parallel, beabstandet zum Boden **311** befindet sich innerlich am Zylinder **310** eine Aufsetzschulter **313**, die als axialer Anschlag für die erste Grundflächenseite auf der Fixierpartie **210** der eingesetzten Ampulle **200** bestimmt ist. Die Aufsetzschulter **313** besteht hier aus vier um je 90° versetzten Stegen. Der Verschlussdeckel **320** zeigt gegen die Standpartie **220** der Ampulle **200**. Allenfalls im Bereich des Spiels zwischen der zweiten Grundflächenseite an der Standpartie **220** und dem Verschlussdeckel **320** kann sich die Ampulle **200** auf der Achse **M** bewegen und liegt ansonsten bei Erschütterung stabil in der Aussenkapsel **300**.

Das implantat **1** wird von einem Halteelement **100** mit der Schraube **101** und dem Hülsenteil **102** gehalten. Wie schon geschildert, greift hierbei das Aussengewindeteil **131** der durch das Hülsenteil **102** ragenden Schraube **101** in die Innengewindebohrung **14** am Implantat 1 ein, während die Gegenschulter **161** der Schulterpartie **160** des Hülsenteils **102** auf der Implantatschulter **11** aufsitzt. Die Fixierpartie **110** des Halteelements **100** ist in die Fixierpartie **210** der Ampulle **200** eingerastet, d.h. der Zylinderabschnitt **116** des Halteelements **100** klemmt in der Einbuchtung **212** der Ampulle **200** und wird von den beiden Backen **215.216** seitlich umfasst Beide Ringschultern **115.117** des Halteelements **100** liegen beiderseits an der Fixierpartie **210** an. Somit wird das Implantat **1** fluchtend zur Mittelachse **M** innerhalb der Ampulle **200** gehalten, ohne die Ampulle **200** zu berühren

### Figuren 6A und 6B

Der auf den Fortsatz **120** des Halteelements **100.100'** aufsteckbare Ratschenadapter **400** besteht aus dem Kopfteil **401** und dem Schaftansatz **402**. Das Kopfteil **401** weist die zu einer Ratsche komplementäre äussere Profilierung **430** und stirnseitig eine axiale Sacklochbohrung **431** zur Aufnahme des Stifts eines Löseschlüssels auf. Der Schaftsansatz **402** hat innerlich einen zur Aufname des Aussenvielkants **121** komplementären Innenvielkant **410.** Dem Innenvielkant **410** nach aussen vorgelagert ist eine den lichten Durchmesser verringernde Einschnürung **411,** so dass zwischen dem Innenvielkant **410** und der Einschnürung **411** eine erweiterte Ringnut **412** entsteht. Die Ringnut **412** dient der Aufnahme eines in der Radialnut **123** am Fortsatz **120** sitzenden Sicherungselements nachdem dieses beim Aufstecken des Ratschenadapters **400** die Einschnürung **411** übersprungen hat. Hierdurch ist der Ratschenadapter **400** quasi auf den Fortsatz **120** aufrastbar und kann sich nicht von selbst lösen.

### Figur 7

Für das Handling ist ferner ein Löseschlüssel **700** vorgesehen, welcher zum Erfassen des Aussenvielkant-Segments **170,170'** am Hülsenteil **102,102'** des Halteelements **100,100'** dient. Einserseits ist der Löseschlüssel **700** als abgewinkelter Gabelschlüssel **701** und anderseits als gerader Ringschlüssel **702** ausgebildet. Nahe des Ringschlüssels **702** befindet sich auf der Flachseite **703** ein Führungsstift **704.** Ob der Gabel- oder Ringschlüssel **701,702** zur Anwendung kommt, richtet sich nach den Raumverhältnissen und dem Vorzug des Anwenders.

### Figuren 8A bis 8J

Im Zusammenhang mit der nachstehenden Figurenfolge wird die schrittweise Handhabung der Ampulle **200** unter beispielhafter Verwendung eines Implantats 1 und eines Halteelements **100** erläutert.

*Schritt 1* (Fig. 8A): Im komplettierten Zustand steckt die Ampulle **200** in der verschlossenen Aussenkapsel **300,** bestehend aus dem Zylinder **310** und dem Verschlussdeckel **320**. Das Halteelement **100** hält das Implantat **1** und ist seinerseits von der Ampulle **200** in der Einbuchtung **212** fixiert. Der gesamte Inhalt der Aussenkapse! **300** ist steril.

*Schritt 2* (Fig. 8B): Um die Aussenkapsel **300** zu öffnen, wird der Verschlussdeckel **320** vom Zylinder **310** abgenommen.

*Schritt 3* (Fig. 8C): Die Ampulle **200** wird mit dem darin enthaltenen Implantat **1** aus dem jetzt offenen Zylinder **310** der Aussenkapsel **300** auf eine sterile Unterlage gekippt.

*Schritt 4* (Fig. 8D): Aus der Ampulle **200** ragt der Fortsatz **120** mit dem Aussenvielkant **121** heraus. Zum Ansetzen von Eindrehwerkzeugen - nämlich einer Ratsche oder einem zahnärztlichen Handstück - werden ein Ratschenadapter **400** oder ein Adapter **450** für das zahnärztliche Handstück bereitgehalten. Der Adapter **450** besitzt an einem Ende eine standardisierte Dentalkupplung **451** und dieser gegenüber liegend, einen Schaftansatz **452,** welcher ebenfalls zum Aufstecken auf den Fortsatz **120** bestimmt ist und einen analogen inneren Aufbau besitzt, wie der Schaftansatz **402** des Ratschenadapters **400.**

*Schritt 5* (Fig. 8E): Je nach zu verwendendem Eindrehwerkzeug steckt man den Ratschenadapter **400** oder den Adapter **450** für das zahnärztliche Handstück **800** auf den Fortsatz **120** und entnimmt das implantat **1** aus der Ampulle **200.** Das am Ratschenadapter **400** oder am Adapter **450** und am Handstück **800** mittels des Halteelements **100** hängende Implantat **1** wird zur Einsatzstelle transferiert.

*Schritt 6* (Fig. 8F): Bei Benutzung einer Ratsche als Eindrehinstrument wird man zunächst den Ratschenadapter **400** mit der Hand ergreifen und das Implantat **1** in die im Knochen **K** vorbereitete Bohrung **KB** ansatzweise eindrehen.

*Schritt 7* (Fig. 8G): Zum weiteren Eindrehen des Implantats **1** steckt man eine Ratsche 600 und einen Löseschlüssel **700** auf den Ratschenadapter **400** auf. Der Führungsstift **704** des Löseschlüssels **700** greift dabei in die Sacklochbohrung **431** ein. Das Eindrehen des Implantats **1** kann auch mittels eines motorisch angetriebenen, zahnärztlichen Handstücks **800** erfolgen, sofern zuvor der zugehörige Adapter **450** auf das Halteelement **100** aufgesteckt wurde

*Schritt 8* (Fig. 8H): Nach Beendigung des Eindrehens mittels einer Ratsche **600** wird der Löseschlüssel **700** von der Ratsche **600** entfernt.

*Schritt 9* (Fig. 8I): Unabhängig davon, ob das Einsetzen des Implantats per Ratsche **600** oder mittels Handstück **800** erfolgte, wird zum Lösen des Halteelements **100**, d.h. zuerst zum Entkontern des Hülsenteils **102** vom Implantatkopf **10** der Löseschlüssel **700** an das Aussenvielkant-Segment **170** angesetzt. Den Gabelschlüssel **701** kann man auf das Aussenvielkant-Segment **170** von der Seite aufstecken. Beim Aufstecken des Ringschlüssels **702**, was von oben erfolgt, müsste zuvor, kurzzeitig das Eindrehinstrument **600,800** mit den zugehörigen Adaptern **400,450** vom Fortsatz **120** des Halteelements **100** abgezogen werden. Mit in der Wirkungsrichtung umgeschalteter Ratsche **600** bzw. Handstück **800** und angesetztem Löseschlüssel **700** wird das Halteelement **100** vom Implantat **1** entkontert. Nun entfernt man den Löseschlüssel **700** und dreht die Schraube **101** heraus, bis deren Aussengewindeteil **131** mit dem Innengewinde **14** im Implantatkopf **10** ausser Eingriff kommt.

*Schritt 10* (Fig. 8J): Schliesslich kann des Halteelement **100** vom Implantat **1.** nun in situ, abgenommen werden.

Zu den vorbeschriebenen Vorrichtungen sind weitere konstruktive Variationen realisierbar. Hier ausdrücklich erwähnt seien noch:
- Das Halteelement **100,100'** ist auch für anders konfigurierte Implantate verwendbar. Massgeblich ist, dass die Implantate eine von aussen zugängliche Innengewindebohrung **14** zum Einschrauben des Aussengewindeteils **131** des Halteelements 100 aufweisen. Ferner müssen die Implantate eine Implantatschulter **11** oder eine vergleichbare Fläche zum Abstützen des Hülsenteils **102** besitzen.
- Anstelle des Aussenvielkants **121** an der Schraube **101** ist auch eine andere äussere, nicht-rotationssymmetrische Kontur am Fortsatz **120,120'** denkbar. wie auch eine Innenkontur, wenn die anzusetzenden Werkzeuge einen komplementären Dorn hätten.
- Die Backen **215,216** an der Ampulle **200** könnten generell durch ein Klemmorgan ersetzt werden.
- Für Implantate **1,1'** mit einem unterhalb der Implantatschulter **11,11'** sich aufsteigend konisch erweiternden Implantatkopf **10,10'** wird alternativ folgende Befestigung für das Halteelement vorgeschlagen. Bei der Schraube **101,** welche in die Innengewindebohrung **14,14'** im implantat **1,1'** eingreift, könnte der Schraubenschaft **130,** mit dem Aussengewinde- und Zylinderteil **131,132** entfallen. Hülsenteil **102,102'** und Schraubenfortsatz **120** wären dann einteilig. Die temporäre Fixierung des Halteelements auf dem Implantat **1,1'** wird dann durch ein elastisches Schappelement zuunterst des Hülsenteils **102,102'** realisiert, welches beim Aufdrücken auf die Implantatschulter **11,11'** diese überspringt und dann untergreift. Diese Befestigung des Halteelements ist dann besonders zweckmässig, wenn das Implantat **1'** ein die Implantatschulter **11'** überragendes Vielkantsegment **12'** aufweist und/oder, wenn keine Innengewindebohrung **14,14'** vorhanden ist. Hier wird auf die Befestigung gemäss der Patentpublikation WO-A-97 28755 der Anmelderin Bezug genommen.

## Patentansprüche

1. Halteelement **(100, 100')** für ein in Knochen (**K**) einzusetzendes Implantat **(1, 1')** mit einem Implantatkopf **(10, 10'),** einer daran vorhandenen Abstützfläche, insbesondere einer Implantatschulter **(11, 11')** und einer sich zumindest im wesentlichen axial erstreckenden Innengewindebohrung **(14, 14'),** wobei
a) das Halteelement **(100, 100')** aus einem Hülsenteil **(102, 102')** und einer durch das Hülsenteil **(102, 102')** hindurch ragenden, drehbaren Schraube **(101)** besteht;
b) das Hülsenteil **(102, 102')** sich an der Abstützfläche des Implantats **(1, 1'),** insbesondere der Implantatschulter **(11, 11')** abstützen kann;
c) das Hülsenteil **(102, 102')** ein Aussenvielkant-Segment **(170, 170')** aufweist;
d) durch das Hülsenteil **(102, 102')** eine Axialbohrung **(162, 162')** zum Durchtritt des Schafts **(130)** der Schraube **(101)** verläuft;
e) ein Aussengewindeteil **(131)** des Schraubenschafts **(130)** zum Eingriff in die Innengewindebohrung **(14, 14')** im Implantat **(1, 1'**) bestimmt ist;
f) die Schraube **(101)** einen okklusalen Fortsatz **(120)** mit einer nicht-rotationssymetrischen Kontur **(121)** zum Ansetzen eines Werkzeugs besitzt, **dadurch gekennzeichnet, dass**
g) das Halteelement **(100, 100')** bereits während der Herstellung des Implantats **(1, 1')** mit diesem verschraubt werden kann und - beginnend bei den nachfolgenden Phasen der Implantatherstellung bis einschliesslich der Implantation - nutzbar ist; und
h) zwischen der nicht rotationssymetrischen Kontur **(121)** der Schraube **(101)** und dem Hülsenteil **(102, 102')** eine Fixierpartie **(110)** vorhanden ist, die zum Ansetzen eines Manipulierorgans in einer Vorrichtung zu Bearbeitungs- und/oder Transport- und/oder Lagerzwecken und/oder Arretierung innerhalb einer Ampulle **(200)** dient.

2. Halteelement **(100, 100')** nach Anspruch 1 für ein Implantat **(1, 1')** mit einer Implantatschulter **(11, 11')** an einem Implantatkopf **(10, 10'), dadurch gekennzeichnet, dass** das Hülsenteil **(102, 102')** apikal eine Schulterpartie **(160, 160')** aufweist, welche mit einer nach apikal gewandten, zur Implantatschulter **(11, 11')** komplementären Gegenschulter **(161, 161')** abschliesst und sich das Aussenvielkant-Segment **(170, 170')** okklusal gerichtet vertikal über die Schulterpartie **(160, 160' )** erstreckt.

3. Halteelement **(100, 100')**nach Anspruch 1 oder 2, **dadurch gekennzeichnet, dass**
a) in der Axialbohrung **(162, 162')** ein zum Aussengewindeteil **(131)** des Schraubenschafts **(130)** komplementärer Innengewindeabschnitt **(163, 163')** vorhanden ist; und
b) der Schraubenschaft **(130)** über dem am freien Ende befindlichen Aussengewindeteil **(131)** ein Zylinderteil **(132)** besitzt, welches durch den Innengewindeabschnitt **(163, 163')** gleiten kann, so dass die in das Hülsenteil **(102, 102')** eingedrehte Schraube **(101)** begrenzt axial beweglich ist.

4. Halteelement **(100, 100')** nach einem der Ansprüche 1 bis 3, **dadurch gekennzeichnet, dass**
a) die Fixierpartie **(110)** durch zwei zueinander beabstandete Bunde **(114, 118)** und einem zwischen diesen liegenden Zylinderabschnitt **(116)** gebildet wird, der gegenüber den Bunden **(114, 118)** im Durchmesser reduziert ist; wodurch
b) an den Übergängen vom Zylinderabschnitt **(116)** zu den Bunden **(114, 118)** jeweils eine Ringschulter **(115, 117)** entsteht;
c) die nicht-rotationssymetrische Kontur **(121)** am Fortsatz **(120)** der Schraube **(101)** ein Aussenvielkant **(121)** ist; zwischen dem Aussenvielkant **(121)** und dem angrenzenden Bund **(118)** eine Radialnut **(123)** zur Aufnahme eines Sicherungselements vorgesehen ist; und
d) der dem Hülsenteil **(102, 102')** zugewandte Bund **(114)** eine Konusschulter **(113)** aufweist, welche mit einer komplementären Aufsetzschulter **(171, 171')** am Hülsenteil **(102, 102')** zur Anlage kommt.

5. Kombination aus einem Halteelement **(100, 100'**) nach einem der Ansprüche 1 bis 4 und einem Implantat **(1, 1')** mit einem Implantatkopf **(10, 10')**, einer daran vorhandenen Abstützfläche, insbesondere einer Implantatschulter **(11, 11')**, und einer sich zumindest im wesentlichen axial erstreckenden Innengewindebohrung **(14, 14')**, **dadurch gekennzeichnet, dass** sich das Hülsenteil **(102, 102')** an der Abstützfläche des Implantats **(1, 1'),** insbesondere der Implantatschulter **(11, 11')** abstützt und das Hülsenteil **(102, 102')** mit der Schraube **(101)** in der Innengewindebohrung **(14, 14')** des Implantats **(1, 1')** befestigt ist.

6. Ampulle **(200)** zum Transport, zur Aufbewahrung und zur Bereitstellung eines Implantates **(1, 1')** unmittelbar vor dem Einsetzen in den Knochen **(K),** wobei die Ampulle **(200)** einen äusseren Mantel (**230**) besitzt, **dadurch gekennzeichnet, dass** die Ampulle eine Fixierpartie **(210)** aufweist und dass in der Ampulle **(200)** ein Implantat **(1, 1')** angeordnet ist, das mit der Fixierpartie **(110)** eines Halteelements **(100, 100')** nach einem der Ansprüche 1 bis 4 in der Fixierpartie **(210)** der Ampulle **(200)** gehalten ist.

## Claims

1. A holding element (100, 100') for an implant (1, 1') which is to be inserted in bone (K), and which comprises an implant head (10, 10'), a supporting face present thereon, particularly an implant shoulder (11, 11'), and an internally threaded hole (14, 14') which extends at least substantially axially, wherein
a) the holding element (100, 100') consists of a sleeve part (102, 102') and of a rotatable screw (101) which protrudes through the sleeve part (102, 102');
b) the sleeve part (102, 102') can be supported on the supporting face of the implant (1, 1'), particularly on the implant shoulder (11, 11');
c) the sleeve part (102, 102') comprises an external polygonal segment (170, 170');
d) an axial bore (162, 162') extends through the sleeve part (102, 102') for the passage of the shank (130) of the screw (101);
e) an externally threaded part (131) of the screw shank (130) is intended to fit into the internally threaded hole (14, 14') in the implant (1, 1');
f) the screw (101) has an occlusal extension (120) with a non-rotationally symmetrical contour (121) for the fitting of a tool, **characterised in that**
g) the holding element (100, 100') can already be screwed to the implant (1, 1') during the manufacture thereof, and can be used commencing with the following phases of implant manufacture, up to and including implantation; and
h) a fixing part (110) is present between the non-rotationally symmetrical contour (121) of the screw (101) and the sleeve part (102, 102'), and serves for the fitting of a manipulating element in a device for processing and/or transport and/or storage purposes and/or for locking inside an ampoule (200).

2. A holding element (100, 100') according to claim 1 for an implant (1, 1') comprising an implant shoulder (11, 11') on an implant head (10, 10'), **characterised in that** the sleeve part (102, 102') comprises an apical shoulder part (160, 160') which locks with an apically facing counter-shoulder (161, 161') which is complementary to the implant shoulder (11, 11'), and the external polygonal segment (170, 170') is occlusally oriented and extends vertically beyond the shoulder part (160, 160').

3. A holding element (100, 100') according to claim 1 or 2, **characterised in that**
a) an internally threaded section (163, 163') which is complementary to the externally threaded part (131) of the screw shank (130) is present in the axial bore (162, 162'); and
b) above its externally threaded part (131) which is situated at its free end, the screw shank (130) has a cylindrical part (132) which can slide through the internally threaded section (163, 163') so that the screw (101) which is screwed into the sleeve part (102, 102') has limited axial mobility.

4. A holding element (100, 100') according to any one of claims 1 to 3, **characterised in that**
a) the fixing part (110) is formed by two spaced-apart collars (114, 118) and a cylindrical section (116) which is situated therebetween and the diameter of which is less than that of the collars (114, 118); whereby
b) an annular shoulder (115, 117) is formed at each of the transitions from the cylindrical section (116) to the collars (114, 118);
c) the non-rotationally symmetrical contour (121) on the extension (120) of the screw (101) is an external polygon (121); a radial groove (123) for receiving a securing element is provided between the external polygon (121) and the adjacent collar (118); and
d) the collar (114), which faces the sleeve part (102, 102'), comprises a conical shoulder (113) which comes into contact with a complementary placement shoulder (171, 171') on the sleeve part (102, 102').

5. A combination of a holding element (100, 100') according to any one of claims 1 to 4 and an implant (1, 1') comprising an implant head (10, 10'), a supporting face which is present thereon, particularly an implant shoulder (11, 11'), and an internally threaded hole (14, 14') which extends at least substantially axially, **characterised in that** the sleeve part (102, 102') is supported on the supporting face of the implant (1, 1'), particularly on the implant shoulder (11, 11'), and the sleeve part (102, 102') is fixed in the internally threaded hole (14, 14') of the implant (1, 1') by the screw (101).

6. An ampoule (200) for the transport, for the storage, and for the provision of an implant (1, 1') directly before insertion in the bone (K), wherein the ampoule (200) has an external envelope (230), **characterised in that** the ampoule has a fixing part (210), and that an implant (1, 1') is disposed in the ampoule (200) and is held in the fixing part (210) of the ampoule (200) by the fixing part (110) of a holding element (100, 100') according to any one of claims 1 to 4.

## Revendications

1. Elément de retenue (100, 100') pour un implant (1, 1') à mettre en place dans des os (K), avec une tête d'implant (10, 10') ; une surface d'appui, prévue dans celle-ci, en particulier un épaulement d'implant (11, 11') et un trou taraudé (14, 14'), s'étendant au moins essentiellement axialement,
a) l'élément de retenue (100, 100') se composant d'une partie manchon (102, 102') et d'une vis (101) rotative, traversant la partie manchon (102, 102') ;
b) la partie manchon (102, 102') pouvant s'appuyer sur la surface d'appui de l'implant (1, 1'), en particulier sur l'épaulement d'implant (11, 11') ;
c) la partie manchon (102, 102') présentant un segment polyédrique extérieur (170, 170') ;
d) un trou axial (162, 162') traversant la partie manchon (102, 102') pour le passage de la tige (130) de la vis (101) ;
e) une partie filetée mâle (131) de la tige de la vis (130) étant définie aux fins de prise avec le trou taraudé (14, 14') dans l'implant (1, 1') ;
f) la vis (101) possédant un prolongement occlusal (120) avec un profil sans symétrie de révolution (121) pour l'application d'un outil, **caractérisé en ce que**
g) l'élément de retenue (100, 100') peut, dès la fabrication de l'implant (1, 1'), être vissé avec celui-ci et est utilisable - en commençant par les phases suivantes de la fabrication de l'implant jusque et y compris l'implantation - et
h) une partie fixation (110) est présente entre le profil sans symétrie de révolution (121) de la vis (101) et la partie manchon (102, 102'), qui sert à l'application d'un organe de manipulation dans un mécanisme pour le traitement et/ ou le transport et / ou l'entreposage et / ou l'arrêt à l'intérieur d'une ampoule (200).

2. Elément de retenue (100, 100') selon la revendication 1, pour un implant (1, 1') avec un épaulement d'implant (11, 11') sur une tête d'implant (10, 10'), **caractérisé en ce que** la partie manchon (102, 102') présente, de manière apicale, une partie épaulement (160, 160'), qui se termine par un contre-épaulement (161, 161'), complémentaire de l'épaulement d'implant (11, 11'), tourné vers le sommet et que le segment polyédrique extérieur (170, 170') s'étend, orienté de manière occlusale, verticalement au-dessus de la partie d'épaulement (160, 160').

3. Elément de retenue (100, 100') selon la revendication 1 ou 2, **caractérisé en ce**
a) qu'il est prévu, dans le trou axial (162, 162'), une section taraudée (163, 163'), complémentaire de la partie filetée mâle (131) de la tige de la vis (130) et
b) que la tige de la vis (130) possède, au-dessus de la partie filetée mâle (131), située à l'extrémité libre, une partie cylindrique (132), qui peut glisser à travers la section taraudée (163, 163'), de sorte que la vis (101), vissée dans la partie manchon (102, 102') est mobile axialement de manière limitée.

4. Elément de retenue (100, 100') selon l'une des revendications 1 à 3, **caractérisé en ce que**
a) la partie fixation (110) est formée par deux collets (114, 118), éloignés l'un par rapport à l'autre et par une section cylindrique (116), située entre ceux-ci, section cylindrique qui est réduite en diamètre vis-à-vis des collets (114, 118) ; ce par quoi
b) un épaulement annulaire (115, 117) est formé respectivement aux transitions entre la section cylindrique (116) et les collets (114, 118) ;
c) le profil sans symétrie de révolution (121) est, sur le prolongement (120) de la vis (101), un polyèdre extérieur (121); entre le polyèdre extérieur (121) et le collet adjacent (118), est prévue une gorge radiale (123), pour loger un élément de sécurité et
d) le collet (114), tourné vers la partie manchon (102, 102'), présente un épaulement conique (113), qui prend appui sur la partie manchon (102, 102') avec un épaulement de contact (171, 171') complémentaire.

5. Combinaison d'un élément de retenue (100, 100'), selon l'une des revendications 1 à 4 et d'un implant (1, 1'), avec une tête d'implant (10, 10'), une surface d'appui, prévue dans celle-ci, en particulier un épaulement d'implant (11, 11') et un trou taraudé (14, 14'), s'étendant au moins essentiellement axialement, **caractérisé en ce que** la partie manchon (102, 102') s'appuie sur la surface d'appui de l'implant (1, 1'), en particulier sur l'épaulement d'implant (11, 11') et que la partie manchon (102, 102') est fixée avec la vis (101) dans le trou taraudé (14, 14') de l'implant (1, 1').

6. Ampoule (200) pour le transport, la conservation et la mise à disposition d'un implant (1, 1') immédiatement avant la mise en place dans les os (K), l'ampoule (200) possédant une gaine extérieure (230), **caractérisée en ce que** l'ampoule présente une partie fixation (210) et que dans l'ampoule (200) est disposé un implant (1, 1'), qui est maintenu avec la partie fixation (110) d'un élément de retenue (100, 100'), selon l'une des revendications 1 à 4, dans la partie fixation (210) de l'ampoule (200).
